# EUROPEAN PATENT SPECIFICATION

(11) **EP 3 425 623 B1**
(45) Date of publication and mention of the grant of the patent: **17.09.2025**
(21) Application number: 18180743.9
(22) Date of filing: 29.06.2018
(51) Int. Cl.: G09G 5/00, G09G 3/36

(54) **METHOD AND DEVICE FOR ALWAYS ON DISPLAY, AND COMPUTER-READABLE STORAGE MEDIUM**
VERFAHREN UND VORRICHTUNG FÜR DAUERHAFT EINGESCHALTETE ANZEIGE UND COMPUTERLESBARES SPEICHERMEDIUM
PROCÉDÉ ET DISPOSITIF D'AFFICHAGE CONTINU ET SUPPORT D'INFORMATIONS LISIBLE SUR ORDINATEUR

(30) Priority: 04.07.2017 CN 201710539064
(43) Date of publication of application: 09.01.2019
(73) Proprietor: Beijing Xiaomi Mobile Software Co., Ltd., Beijing 100085 (CN)
(72) Inventor: LI, Guosheng, Beijing, Beijing 100085 (CN); ZHU, Shaoxiong, Beijing, Beijing 100085 (CN); GE, Weiyan, Beijing, Beijing 100085 (CN)
(74) Representative: dompatent von Kreisler Selting Werner - Partnerschaft von Patent- und Rechtsanwälten mbB

(56) References cited:
- US-A1- 2015 228 239
- US-A1- 2015 325 213
- US-A1- 2016 293 096
- LAWRENCE R: "High-speed serial interface for mobile displays", PROCEEDINGS OF THE 13TH INTERNATIONAL DISPLAY WORKSHOPS : DEC. 6 - 8, 2006, OTSU PRINCE HOTEL, OTSU, JAPAN, TOKYO : ITE ; SAN JOSE, CALIF. : SID, JP, vol. 3, 6 December 2006 (2006-12-06), pages 2013 - 2016, XP008130948

## Description

### TECHNICAL FIELD

The present disclosure generally relates to a field of information processing, and more particularly to a method and a device for always on display, and a computer-readable storage medium.

### BACKGROUND

As smart terminals such as smart phones, tablet PCs are widely used, users rely more and more on smart terminals. According to statistics, a user looks over his/her smart phone about 150 times per day by lighting up the screen thereof, while most users view the smart phone just to check time and notification messages, so a method for always on display is provided in order to help the users to obtain time and notification messages.

In the related art, only a part of the area of the screen of the smart terminals may be kept continuously lit so as to display time and notification messages. Among the smart terminals, the current accurate time may be acquired by Application Processor (AP) every minute, a picture may be drawn according to the acquired time and a preset display format to obtain a current display image. Afterwards, the current display image is transmitted to the Liquid Crystal Display Module (LCM) by the AP of the smart terminal according to an image updating command in the Display Command Set (DCS) of the Mobile Industry Processor interface (MIPI), in order to display by the LCM according to the current display image.

Document US 2015/0228239 A1 discloses a display device performing a pause driving: when updating of the image is detected during the pause driving, the pause driving is interrupted, and the screen of the display unit is forcedly refreshed. US 2016/293096 A1 discloses internal clock signal control for display device, a display driver and a display device system. US 2015/325213 A1 discloses a display device and a mobile electronic apparatus including the display device. A paper titled with "High-speed serial interface for mobile displays" reviews the physical basis for MIPI DSI and describes the packet-based protocal for sending pixels and command data to a display from a host processor.

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

In order to overcome the problem of low efficiency of research and development due to lack of unified communication interfaces when performing an always on display function in an AP and a LCM of a smart terminal, there are provided a method and a device for always on display, and a computer-readable storage medium in the present disclosure. The invention is defined by the appended claims 1-3.

Aspects of the disclosure provide a method for always on display, being applicable to a smart terminal comprising an application processor (AP) and a liquid crystal display module (LCM), as defined in amended claim 1.

A value of the first field is a first preset value or a second preset value, the first preset value is configured to indicate the data packet to be a first one of the at least one data packet, and the second preset value is configured to indicate the data packet to be a following data packet of a previous data packet adjacent to the data packet.

In another embodiment, a value of the second field is also predefined to be a fourth preset value, and the fourth preset value is configured to indicate the type of the data included in the data packet to be time calibration data.

According to an aspect, when transmitting, by the AP, the at least one data packet to the LCM via the MIPI protocol, the method includes transmitting, by the AP, the at least one data packet to the LCM via the MIPI protocol when initialization of the LCM is completed or the always on display function is enabled, wherein the at least one data packet comprises data required for always on display within a preset time period from a current system time, and the value of the second field of the at least one data packet is the third preset value.

According to another aspect, after transmitting, by the AP, the at least one data packet to the LCM via the MIPI protocol, the method includes retrieving, by the AP, a system time once every first preset time interval; and transmitting, by the AP, a data packet comprising the retrieved system time to the LCM via the MIPI protocol, a value of the second field of the data packet comprising the retrieved system time being the fourth preset value.

Aspects of the disclosure also providea smart terminal comprising an application processor (AP) and a liquid crystal display module (LCM), which is defined in amended claim 5.

A value of the first field is a first preset value or a second preset value, the first preset value is configured to indicate the data packet to be a first one of the at least one data packet, and the second preset value is configured to indicate the data packet to be a following data packet of a previous data packet adjacent to the data packet.

In an embodiment, a value of the second field is also predefined to be a fourth preset value, and the fourth preset value is configured to indicate the type of the data included in the data packet to be time calibration data.

In an embodiment, the device further comprises: a retrieving module configured to retrieve a system time once every first preset time interval, in which the transmitting module is further configured to transmit a data packet comprising the retrieved system time to the LCM via the MIPI protocol, a value of the second field of the data packet comprising the retrieved system time being the fourth preset value.

Aspects of the disclosure also provide a program product having stored therein instructions, as defined in amended claim 9.

The technical solutions according to the embodiments of the present disclosure may have the following advantageous effects: in embodiments of the present disclosure, a dedicated first field and a dedicated second field are defined for an always on display function in a display command set DCS of the MIPI protocol. When at least one data packet including data required for always on display is transmitted by an AP to a LCM, the data packet may carry a first field and a second field configured to indicate the data packet to be a data packet for performing always on display and to indicate a type of data included in the data packet. That is, by means of the method according to embodiments of the present disclosure, MIPI communication interfaces having an always on display function are unified, the AP and LCM can be developed by each manufacturer according to the unified communication interfaces so as to implement the always on display function, and thus the efficiency of research and development may be improved. Further, because a type of data included in the data packet may be indicated via the second field, the data required for always on display can be sub-packaged and transmitted by the AP according to the type of data, thus increasing flexibility of always on display.

It is to be understood that both the foregoing general description and the following detailed description are exemplary and explanatory only and are not restrictive of the disclosure, the invention being defined by the claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for always on display, according to an exemplary embodiment of the present disclosure.
Fig. 2 is a flow chart showing another method for always on display, according to an exemplary embodiment of the present disclosure.
Fig. 3A is a block diagram of a device for always on display, according to an exemplary embodiment of the present disclosure.
Fig. 3B is a block diagram of a device for always on display, according to an exemplary embodiment of the present disclosure.
Fig. 3C is a block diagram of a device for always on display, according to an exemplary embodiment of the present disclosure.
Fig. 4 is a block diagram of a device for always on display, according to an exemplary embodiment of the present disclosure.

The specific embodiments of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of illustrative aspects do not represent all implementations consistent with the disclosure. Instead, they are merely examples of apparatuses and methods consistent with aspects related to the disclosure as recited in the appended claims.

Prior to the detailed explanation of the embodiments in the present disclosure, application scenarios of the embodiments in the present disclosure will be described. Smart terminals (e.g., smart phones and tablet PCs) are widely used in daily life. All kinds of information may be obtained by the user through a smart terminal. When a screen of the smart terminal is gone out, an always on display function is provided for the current smart terminal in order to make users directly view the current time, or whether there is basic information such as notification messages without lighting the screen. It should be noted that the always on display function of the smart terminal is implemented through an AP and a LCM of the smart terminal together, that is, the AP of the smart terminal transmits display data to the LCM, and then the information content is displayed by the LCM according to the display data. The method for always on display according to the embodiments of the present disclosure may be applied to the AP of the smart terminal in the above scenarios, so that the AP of the smart terminal may transmit the display data to the LCM more flexibly in order to implement always on display by the LCM according to the display data.

When a smart terminal performs always on display after the screen is gone out, an AP of the smart terminal will draw a full-size image required for always on display once per minute according to the current time. Afterwards, the AP may transmit the drawn full-size image to the LCM via a pre-existing image updating command in the MIPI, and the full-size image may be directly displayed by the LCM. That is, there is no specific command for realization of the always on display function in the DCS of the current MIPI protocol, and then AP may only transmit a full-size image required to display according to the existing general image updating command in the MIPI protocol, so the image updating manner lacks flexibility. Moreover, the updating of the full-size image performed per minute needs to transmit too many data, and an update period is too short, and thus the power consumption of the smart terminal is too large. If it is updated via other protocols, the efficiency of research and development of the AP and the LCM will be reduced due to lacking of unified communication interfaces when the always on display function is implemented, because manufacturers of the AP and the LCM may not be the same manufacturer.

In order to solve the above-mentioned technical problems, in the present embodiment, a method for always on display is provided. The method for always on display will be described below in detail by the following embodiments in conjunction with the drawings.

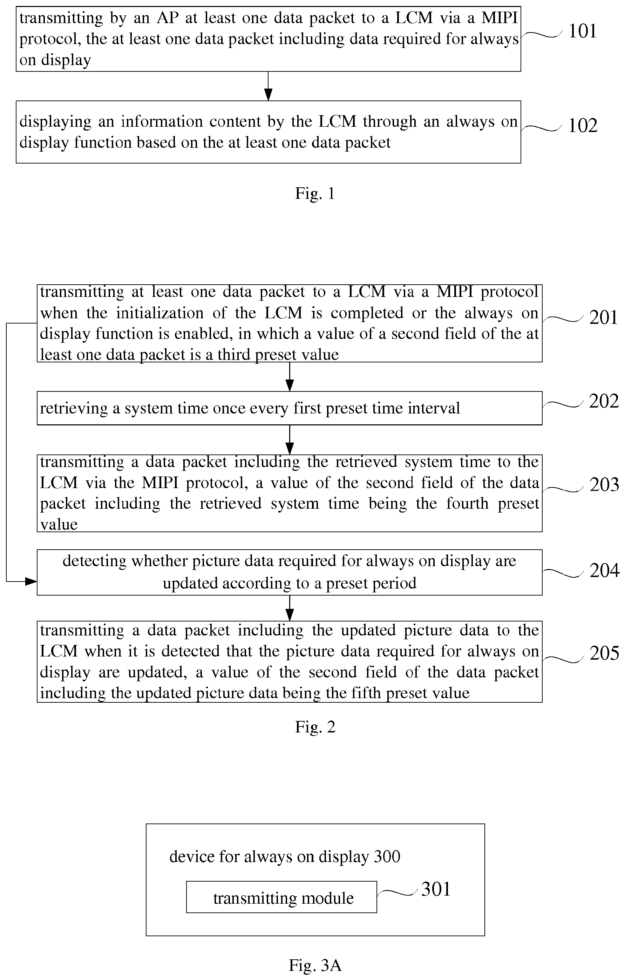

Fig. 1 is a flow chart showing a method for always on display, according to an exemplary embodiment. Referring to Fig. 1, the method is applied to a smart terminal and includes the following steps.

In step 101, at least one data packet is transmitted by an AP to a LCM through a MIPI protocol, in which the at least one data packet includes data required for always on display.

The data packet further carries a first field and a second field for each of the at least one data packet, the first field and the second field both are fields predefined for the always on display function in a display command set DCS of the MIPI protocol, the first field is configured to indicate the data packet to be a data packet for performing always on display, and the second field is configured to indicate a type of data included in the data packet.

In step 102, an information content is displayed by the LCM through an always on display function based on the at least one data packet.

In an embodiment of the present disclosure, a dedicated first field and a dedicated second field are defined for an always on display function in a display command set DCS of the MIPI protocol. When at least one data packet including data required for always on display is transmitted by the AP to the LCM, the data packet may carry a first field and a second field configured to indicate the data packet to be a data packet for performing always on display and to indicate a type of data included in the data packet. That is, by means of the method according to the present embodiment, MIPI communication interfaces having an always on display function are unified, the AP and LCM can be developed by each manufacturer according to the unified communication interfaces so as to implement the always on display function, and thus the efficiency of research and development may be improved. Further, because a type of data included in the data packet may be indicated via the second field, the data required for always on display can be sub-packaged and transmitted by the AP according to the type of data, thus increasing the flexibility of always on display.

A value of the first field is a first preset value or a second preset value, the first preset value is configured to indicate the data packet to be a first one of the at least one data packet, and the second preset value is configured to indicate the data packet to be a following data packet of a previous data packet adjacent to the data packet.

Alternatively, a value of the second field is a third preset value, a fourth preset value or a fifth preset value, the third preset value is configured to indicate the type of the data included in the data packet to be initialization data, the fourth preset value is configured to indicate the type of the data included in the data packet to be time calibration data, and the fifth preset value is configured to indicate the type of the data included in the data packet to be picture update data.

Alternatively, transmitting the at least one data packet to the liquid crystal display module LCM via the mobile industry processor interface MIPI protocol includes: transmitting the at least one data packet to the LCM via the MIPI protocol when the initialization of the LCM is completed or the always on display function is enabled, in which the at least one data packet includes data required for always on display within a preset time period from a current system time, and the value of the second field of the at least one data packet is the third preset value.

Alternatively, after transmitting the at least one data packet to the LCM via the MIPI protocol, the method further includes: retrieving a system time once every first preset time interval; transmitting a data packet including the retrieved system time to the LCM via the MIPI protocol, a value of the second field of the data packet including the retrieved system time being the fourth preset value.

Alternatively, after transmitting the at least one data packet to the LCM via the MIPI protocol, the method further includes: detecting whether picture data required for always on display are updated according to a preset period; and transmitting a data packet including the updated picture data to the LCM when it is detected that the picture data required for always on display are updated, a value of the second field of the data packet including the updated picture data being the fifth preset value.

Fig. 2 is a flow chart showing another method for always on display, according to an exemplary embodiment. Referring to Fig. 2, the method is applied to an AP and includes the following steps.

In step 201, at least one data packet is transmitted to a LCM via a MIPI protocol when the initialization of the LCM is completed or an always on display function is enabled, a value of the second field of the at least one data packet is a third preset value.

In an embodiment of the present disclosure, in order to reduce the power consumption of a smart terminal when performing always on display, i.e., in order to prevent an AP from drawing an entire image per minute, at least one data packet is transmitted to the LCM by the AP before performing always on display, in which the at least one data packet may include all the data required for always on display. Of course, because an image storage space of the LCM is small, and because the previously stored always on display data may be deleted by the LCM each time the screen is lighted, the at least one data packet may include only data required for always on display within a preset time period from a current system time in order to save storage space and prevent the unused data from being deleted after transmitting too much data. The preset time period may be one hour or two hours, and is not limited by the present disclosure.

In addition, before always on display is performed by the LCM, different occasions may be chosen by the AP to transmit at least one packet to the LCM. When a screen of the smart terminal is gone out, a value in a register may be set by the LCM according to an initialization code, and after the initialization is completed, at least one data packet is transmitted by the AP to the LCM via a MIPI protocol. Alternatively, when a current always on display function being enabled is detected by the AP, at least one packet may be transmitted by the AP to the LCM via the MIPI protocol.

It should be noted that for each of the at least one data packet, the data packet includes data required for always on display, and at the same time, the packet may carry a first field and a second field, the first field and the second field both are fields predefined for the always on display function in a display command set DCS of the MIPI protocol, the first field is configured to indicate the data packet to be a data packet for performing always on display, and the second field is configured to indicate a type of data included in the data packet.

A value of the first field may be a first preset value or a second preset value, the first preset value is configured to indicate the data packet to be a first one of the at least one data packet, and the second preset value is configured to indicate the data packet to be a following data packet of a previous data packet adjacent to the data packet. A value of the second field is a third preset value, a fourth preset value or a fifth preset value, the third preset value is configured to indicate the type of the data included in the data packet to be initialization data, the fourth preset value is configured to indicate the type of the data included in the data packet to be time calibration data, and the fifth preset value is configured to indicate the type of the data included in the data packet to be picture update data.

In general, when the AP transmits all or part of the data required for always on display to the LCM, the AP may not be able to transmit all the data through one data packet because of the limited size of the packet. At this time, the AP transmits a plurality of data packets so as to transmit all or part of the data required for always on display to the LCM. When the AP transmits a plurality of data packets, for the first data packet of the plurality of data packets, the AP may carry a first field in the first data packet and set a value of the first field to a first preset value, in order to identify the data packet to be a data packet for performing always on display and to be the first data packet in the plurality of data packets. For the data packet after the first data packet, the AP may set the first field in the subsequent data packet to the second preset value so as to identify the data packet to be a following data packet of a previous data packet adjacent to the data packet. For example, for the second data packet in the plurality of data packets, the first field carried by the same may be set to a second preset value so as to identify the data packet to be a following data packet of the first data packet, and the subsequent data packets can be done in the same manner. Of course, if the AP only transmits one data packet, then the first field carried by the data packet may also be set to the first preset value.

It should be noted that the AP may also include a second field in the transmitted at least one data packet, and the type of data included in each data packet may be identified by taking different values for the second field carried in each data packet.

In this step, when it is detected that the initialization of the LCM is completed or the always on display function is enabled, the at least one data packet transmitted by the AP to the LCM is a data packet including all the data required for always on display, or a data packet including all the data for always on display within a preset time period. That is, the data included in the at least one data packet transmitted by the AP to the LCM are the data necessary for the start of the always on display function. Therefore, for each of the at least one data packet, the AP may carry a second field with the third preset value in the data packet so as to identify the type of the data included in the data packet to be initialization data.

It should be noted that the initialization data may include a background image upon always on display, font bitmap (e.g., images of 0-9 and a-z, icons of various notification messages, etc.) often used for always on display, some setting data for always on display (e.g., font size, color, etc.), etc. In addition, the initialization data may include a reference time which is a current system time acquired by the AP. The LCM may be timed by its own crystal oscillator and may calculate a system time to be displayed at each moment according to the reference time.

After the AP transmits at least one packet including the initialization data to the LCM, the LCM may perform always on display by its own timing according to the initialization data, that is, the AP can go into a sleep state without performing drawing every minute, thus greatly reducing power consumption of the smart terminal during always on display.

However, since there is a certain error in the own timing of the LCM, the AP can timely update the reference time in the LCM at steps 202 and 203 for the accuracy of the system time of always on display. Of course, because some picture data in the transmitted initialization data may be updated according to the user's settings, the AP may also transmit the updated image to the LCM at steps 204 and 205 according to a certain strategy so as to update the corresponding data in the LCM.

In step 202, a system time is retrieved once every first preset time interval.

After the AP transmits at least one packet including the initialization data to the LCM, the LCM may start always on display according to the initialization data. When the LCM performs always on display, the LCM may obtain elapsed time by timing from the acquired system time through its own crystal oscillator, and the elapsed time and the acquired system time are added to obtain a system time to be displayed at each moment. However, since the timing by the crystal oscillator of LCM itself is not accurate enough, there is a certain error, a cumulative error may cause the resulting elapsed time to be inaccurate during always on display for a long time period, and in turn the accuracy of the current system time is affected. In this case, in order to prevent the deviation of the current system time displayed by the LCM caused by the overmuch cumulative error from being too large, the AP may be provided with a timer which retrieves a system time every the first preset time interval, so as to update the reference time previously received by the LCM.

It should be noted that the length of the first preset time interval may be set according to the characteristics of the crystal oscillator of the LCM. If the timing error of the crystal oscillator of the LCM is large, the first preset time interval may be set shorter correspondingly. On the contrary, if the timing error of the crystal oscillator of the LCM is small, the first preset time interval may be set longer. For example, the first preset time interval may be 1 hour or 3 hours, and is not limited by the present disclosure.

In step 203, a data packet including the retrieved system time is transmitted to the LCM via the MIPI protocol, and a value of the second field of the data packet including the retrieved system time is the fourth preset value.

After the AP retrieves a system time every the first preset time interval, the AP may transmit the retrieved system time to the LCM via the MIPI protocol.

The AP may transmit a data packet including the retrieved system time to the LCM via the MIPI protocol, in which the data packet may carry a first field and a second field. Since the retrieved system time included in the data packet is configured to update the reference time of the LCM, that is, the data included in the data packet are configured to update time, the AP may set a value of the second field carried in the data packet to be the fourth preset value, so as to identify the type of the data carried in the data packet to be time calibration data.

By steps 202 and 203, the AP may update the reference time of the LCM only within a certain time interval, that is, the AP does not have to draw and transmit an image once every minute after transmitting the initialization data to the LCM at a time, and it is only necessary to update the required contents in the initialization data after a certain time interval. It is not necessary to transmit the data that need not be updated. It can be seen that the period for updating data by the AP is clearly prolonged and the updated content required for transmission is also clearly reduced, an update manner is more flexible, and power consumption of the smart terminal is also reduced accordingly.

In step 204, whether picture data required for always on display are updated according to a preset period is detected.

After the AP transmits at least one data packet including the initialization data to the LCM, some picture data in the initialization data may be updated due to the user's setting, therefore, the AP may be provided with a timer and detect whether picture data required for always on display are updated according to a preset period.

The preset period may be one hour or two hours or the like, and may be set by the user according to his/her requirements, and is not particularly limited by the present disclosure.

Of course, for image data (e.g., a background image) in the initialization data, a plurality of image data may be simultaneously stored by the AP, and the AP may have been set to display according to which picture data at what time. In this case, it is not necessary to detect whether the picture data has been updated, but it is only necessary to update the image data to the LCM at regular intervals according to a preset time interval.

For example, there are three background images stored in the AP, in which a background image A is configured to display at 00:00-6:00, a background image B is configured to display at 6:00-18:00, and a background image C is configured to display at 18:00-00:00. If the time that the AP transmits the initialization data to LCM is between 6:00-18:00, the background image in the initialization data initially transmitted by the AP to the LCM is the background image B. After this, the AP provided with the timer can actively transmit the background image C to the LCM when reaching 18:00, so as to update the background image C stored in the LCM.

In step 205, a data packet including the updated picture data is transmitted to the LCM when it is detected that the picture data required for always on display are updated, a value of the second field of the data packet including the updated picture data is the fifth preset value.

If the AP detects that the picture data required for always on display has been updated according to the preset period, the AP may directly transmit the data packet including the updated picture data to the LCM via the MIPI protocol. A first field and a second field may be carried in the data packet. Since the data included in the data packet is configured to update part of the picture data stored in the LCM, the AP may set the value of the second field carried in the data packet to be a fifth preset value, so as to identify the data included in the data packet to be picture update data.

It should be noted that if one data packet is insufficient to carry the updated picture data, the AP may transmit the updated picture data to the LCM by transmitting a plurality of data packets. At this time, a value of the first field in the first data packet of the plurality of data packets is the first preset value and a value of the first field in the remaining data packets is the second preset value.

By steps 204 and 205, the AP may transmit the updated picture data to the LCM only within a certain time interval to correspondingly update the picture data in the LCM, that is, the AP does not have to draw and transmit an image once every minute after transmitting the initialization data to the LCM at a time, and it is only necessary to update the required contents in the initialization data after a certain time interval. It is not necessary to transmit the data that need not be updated. It can be seen that the period for updating data by the AP is clearly prolonged and the updated content required for transmission is also clearly reduced, an update manner is more flexible, and power consumption of the smart terminal is also reduced accordingly.

It should be noted that, when the AP transmits a data packet including the updated picture data to the LCM, it is also possible to transmit a time calibration data packet including the current system time to the LCM so that the picture data is correspondingly updated by the LCM while the stored reference time is also updated.

In embodiments of the present disclosure, a dedicated first field and a dedicated second field are defined for an always on display function in a display command set DCS of the MIPI protocol. When at least one data packet including data required for always on display is transmitted by an AP to a LCM, the data packet may carry a first field and a second field configured to indicate the data packet to be a data packet for performing always on display and to indicate a type of data included in the data packet. That is, by means of the method according to embodiments of the present disclosure, MIPI communication interfaces having an always on display function are unified, the AP and LCM can be developed by each manufacturer according to the unified communication interfaces so as to implement the always on display function, and thus the efficiency of research and development may be improved. Further, because the type of data included in the data packet may be indicated via the second field, the data required for always on display can be sub-packaged and transmitted by the AP according to the type of data, thus increasing flexibility of always on display.

In addition, in the embodiments of the present disclosure, the AP does not have to draw and transmit an image once every minute after transmitting the initialization data to the LCM at a time, and it is only necessary to update the required contents (e.g., a reference time and part of the picture data) in the initialization data after a certain time interval. It is not necessary to transmit the data that need not be updated. It can be seen that the period for updating data by the AP is clearly prolonged and the updated content required for transmission is also clearly reduced, an update manner is more flexible, and power consumption of the smart terminal is also reduced accordingly.

After introduction of the method for always on display in the above embodiments, a device for always on display will be described later by the following embodiments.

Fig. 3A is a block diagram of a device 300 for always on display, according to an exemplary embodiment. Referring to Fig. 3A, the device includes a transmitting module 301.

The transmitting module 301 is configured to transmit at least one data packet to a LCM via a MIPI protocol, display an information content by the LCM through an always on display function based on the at least one data packet, the at least one data packet including data required for always on display, in which the data packet further carries a first field and a second field for each of the at least one data packet, the first field and the second field both are fields predefined for the always on display function in a display command set DCS of the MIPI protocol, the first field is configured to indicate the data packet to be a data packet for performing always on display, and the second field is configured to indicate a type of data included in the data packet.

A value of the first field is a first preset value or a second preset value, the first preset value is configured to indicate the data packet to be a first one of the at least one data packet, and the second preset value is configured to indicate the data packet to be a following data packet of a previous data packet adjacent to the data packet.

Alternatively, a value of the second field is a third preset value, a fourth preset value or a fifth preset value, the third preset value is configured to indicate the type of the data included in the data packet to be initialization data, the fourth preset value is configured to indicate the type of the data included in the data packet to be time calibration data, and the fifth preset value is configured to indicate the type of the data included in the data packet to be picture update data.

Alternatively, the transmitting module 301 is specifically configured to: transmit the at least one data packet to the LCM via the MIPI protocol when the initialization of the LCM is completed or the always on display function is enabled, in which the at least one data packet includes data required for always on display within a preset time period from a current system time, and the value of the second field of the at least one data packet is the third preset value.

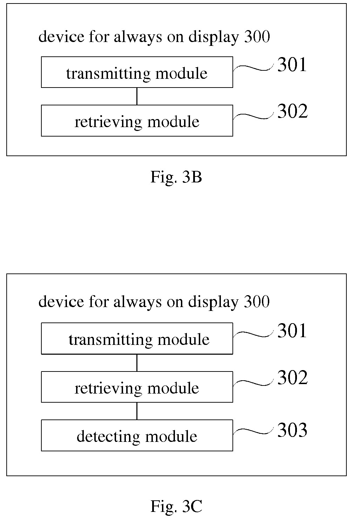

Alternatively, referring to Fig. 3B, the device 300 further includes: a retrieving module 302 configured to retrieve a system time once every first preset time interval, in which the transmitting module 301 is further configured to transmit a data packet including the retrieved system time to the LCM via the MIPI protocol, a value of the second field of the data packet including the retrieved system time being the fourth preset value.

Alternatively, referring to Fig. 3C, the device 300 further includes: a detecting module 303 configured to detect whether picture data required for always on display are updated according to a preset period, in which the transmitting module 301 is further configured to transmit a data packet including the updated picture data to the LCM when it is detected that the picture data required for always on display are updated, a value of the second field of the data packet including the updated picture data being the fifth preset value.

With respect to the devices in the above embodiments, the specific manners for performing operations for individual modules therein have been described in detail in the embodiments regarding the methods for always on display, which will not be elaborated herein.

In an embodiment of the present disclosure, a dedicated first field and a dedicated second field are defined for an always on display function in a display command set DCS of the MIPI protocol. When at least one data packet including data required for always on display is transmitted by an AP to a LCM, the data packet may carry a first field and a second field configured to indicate the data packet to be a data packet for performing always on display and to indicate a type of data included in the data packet. That is, by means of the method according to embodiments of the present disclosure, MIPI communication interfaces having an always on display function are unified, the AP and LCM can be developed by each manufacturer according to the unified communication interfaces so as to implement the always on display function, and thus the efficiency of research and development may be improved. Further, because a type of data included in the data packet may be indicated via the second field, the data required for always on display can be sub-packaged and transmitted by the AP according to the type of data, thus increasing flexibility of always on display.

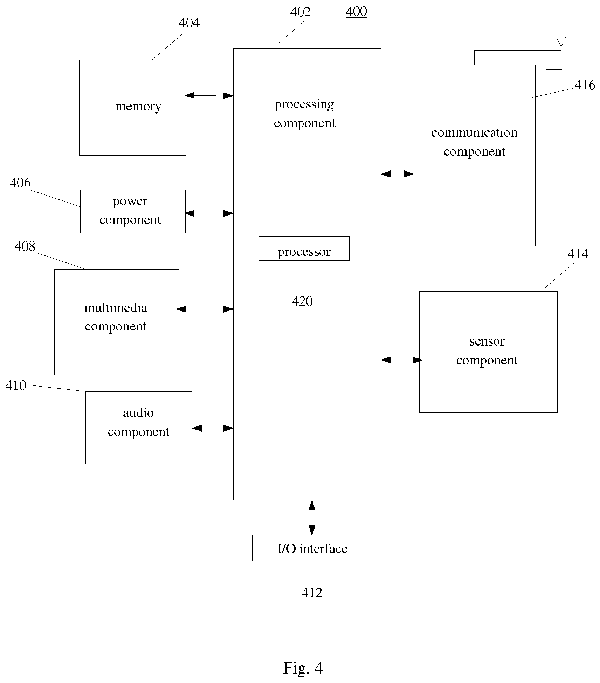

Fig. 4 is a block diagram of a device 400 for always on display, according to an exemplary embodiment. For example, the device 400 may be a mobile phone, a computer, a digital broadcast terminal, a messaging device, a gaming console, a tablet, a medical device, exercise equipment, a personal digital assistant, and the like.

Referring to Fig. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the methods in the embodiments shown in Figs. 1-2.

In exemplary embodiments, there is also provided a non-transitory computer-readable storage medium including instructions, such as included in the memory 404, executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

A non-temporary computer-readable storage medium has stored therein instructions that, when executed by a processor of a mobile terminal, causes the mobile terminal to perform a method for always on display. The method for always on display includes: transmitting at least one data packet to a liquid crystal display module LCM via a mobile industry processor interface MIPI protocol, and displaying an information content by the LCM through an always on display function based on the at least one data packet, the at least one data packet including data required for always on display, in which the data packet further carries a first field and a second field for each of the at least one data packet, the first field and the second field both are fields predefined for the always on display function in a display command set DCS of the MIPI protocol, the first field is configured to indicate the data packet to be a data packet for performing always on display, and the second field is configured to indicate a type of data included in the data packet.

A value of the first field is a first preset value or a second preset value, the first preset value is configured to indicate the data packet to be a first one of the at least one data packet, and the second preset value is configured to indicate the data packet to be a following data packet of a previous data packet adjacent to the data packet.

Alternatively, a value of the second field is a third preset value, a fourth preset value or a fifth preset value, the third preset value is configured to indicate the type of the data included in the data packet to be initialization data, the fourth preset value is configured to indicate the type of the data included in the data packet to be time calibration data, and the fifth preset value is configured to indicate the type of the data included in the data packet to be picture update data.

Alternatively, transmitting the at least one data packet to the liquid crystal display module LCM via the mobile industry processor interface MIPI protocol includes: transmitting the at least one data packet to the LCM via the MIPI protocol when the initialization of the LCM is completed or the always on display function is enabled, in which the at least one data packet includes data required for always on display within a preset time period from a current system time, and the value of the second field of the at least one data packet is the third preset value.

Alternatively, after transmitting the at least one data packet to the LCM via the MIPI protocol, the method further includes: retrieving a system time once every first preset time interval; transmitting a data packet including the retrieved system time to the LCM via the MIPI protocol, a value of the second field of the data packet including the retrieved system time being the fourth preset value.

Alternatively, after transmitting the at least one data packet to the LCM via the MIPI protocol, the method further includes: detecting whether picture data required for always on display are updated according to a preset period; and transmitting a data packet including the updated picture data to the LCM when it is detected that the picture data required for always on display are updated, a value of the second field of the data packet including the updated picture data being the fifth preset value.

In embodiments of the present disclosure, a dedicated first field and a dedicated second field are defined for an always on display function in a display command set DCS of the MIPI protocol. When at least one data packet including data required for always on display is transmitted by an AP to a LCM, the data packet may carry a first field and a second field configured to indicate the data packet to be a data packet for performing always on display and to indicate a type of data included in the data packet. That is, by means of the method according to embodiments of the present disclosure, MIPI communication interfaces having an always on display function are unified, the AP and LCM can be developed by each manufacturer according to the unified communication interfaces so as to implement the always on display function, and thus the efficiency of research and development may be improved. Further, because a type of data included in the data packet may be indicated via the second field, the data required for always on display can be sub-packaged and transmitted by the AP according to the type of data, thus increasing flexibility of always on display.

In the above embodiments, it may be implemented in all or in part by software, hardware, firmware, or any combination thereof. When implemented by software, it may be implemented in all or in part in a form of a computer program product. The computer program product includes one or more computer instructions. The process or function described in the embodiments of the present disclosure is generated in all or in part, when the computer instructions are loaded and executed on a computer. The computer may be a general purpose computer, a dedicated computer, a computer network, or other programmable devices. The computer instructions may be stored in a computer-readable storage medium or transmitted from one computer-readable storage medium to another computer-readable storage medium, for example, transmitted from a website, a computer, a server, or a data center to another website, computer, server, or data center in a wired mode (such as coaxial cable, optical fibre, digital subscriber line (DSL)) or a wireless mode (e.g., infrared mode, wireless mode, microwave mode, etc.). The computer-readable storage medium may be any available medium that the computer can access or a data storage device (such as a server, a data center, etc.) containing one or more integrated available mediums. The available medium may be a magnetic medium (e.g., a floppy disk, a hard disk, a magnetic tape), an optical medium (e.g., Digital Versatile Disc (DVD)), or a semiconductor medium (e.g., Solid State Disk (SSD)), etc.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other embodiments of the disclosure will be apparent to those skilled in the art from consideration of the specification and practice of the disclosure disclosed here.

## Claims

1. A method for always on display, being applicable to a smart terminal comprising an application processor, AP, and a liquid crystal display module, LCM, connected via a mobile industry processor interface MIPI, the LCM comprising a crystal oscillator, the method comprising:
acquiring, by the AP, a current system time as a reference time and including the reference time in initialization data;
transmitting, by the AP, a first data packet including the initialization data via a MIPI protocol to the LCM;
starting an always-on-display by the LCM according to the initialization data;
after transmitting the first data packet via the MIPI protocol to the LCM, detecting, by the AP, whether an initialization of the LCM is completed or whether an always on display function is enabled by the LCM;
retrieving, by the AP, a current system time as a reference time once every first preset time interval;
transmitting, by the AP, a second data packet to the LCM via the MIPI protocol in response to detecting that the initialization of the LCM is completed or the always on display function is enabled by the LCM, in which the second data packet includes the retrieved system time as time calibration data;
performing timing through the crystal oscillator of the LCM, and calculating a system time based on the time calibration data and displaying the system time, by the LCM;
after transmitting the first data packet via the MIPI protocol to the LCM, detecting, by the AP, whether picture data required for always on display is updated according to a preset period; and
in response to detecting that the picture data required for always on display is updated, transmitting, by the AP, an update packet as a third data packet comprising the picture update data to the LCM,
displaying an information content by the LCM through the always on display function based on the first, second, third data packet so that picture data is updated based on the picture update data;
the method being **characterized in that**:
each of the first, second, third data packet further includes a first field and a second field, the first field and the second field both are fields predefined for the always on display function in a display command set, DCS, of the MIPI protocol,
wherein the first field is configured to indicate whether a data packet is a first one of at least two packets required for the LCM performing always on display, and a value of the first field is a first preset value or a second preset value, the first preset value is configured to indicate the data packet to be the first one of the at least two data packets, and the second preset value is configured to indicate the data packet to be the following one of a previous data packet in the at least two data packets;
a value of the second field of the first data packet is a third preset value to indicate a type of data included in the first data packet to be the initialization data;
a value of the second field of the second data packet is a fourth preset value to indicate a type of data included in the second data packet is the time calibration data;
a value of the second field of the third data packet is a fifth preset value to indicate the type of data included in the third data packet to be the picture update data.

2. A smart terminal for always on display (300) comprising an application processor, AP, and a liquid crystal display module, LCM, connected via a mobile industry processor interface MIPI, the LCM comprising a crystal oscillator,
the AP is configured to acquire a current system time as a reference time and include the reference time in initialization data,
wherein the AP comprises a transmitting module (301) configured to transmit a first data packet including the initialization data via a MIPI protocol to the LCM;
wherein the LCM is adapted to start an always-on-display according to the initialization data; the AP is configured to after transmitting the first data packet via the MIPI protocol to the LCM, detect whether an initialization of the LCM is completed or whether an always on display function is enabled by the LCM;
wherein the AP comprises a retrieving module (302) configured to retrieve a current system time as a reference time once every first preset time interval, the transmitting module (301) is further configured to transmit a second data packet to the LCM via the MIPI protocol, in response to detecting that the initialization of the LCM is completed or the always on display function is enabled by the LCM, in which the second data packet includes the retrieved system time as time calibration data,
wherein the LCM is adapted to perform timing through the crystal oscillator of the LCM, and calculate a system time based on the time calibration data and display the system time;
wherein the AP further comprises a detecting module (303) configured to detect whether picture data required for always on display is updated according to a preset period, after transmitting the first data packet via the MIPI protocol to the LCM,
wherein the transmitting module (301) is further configured to transmit, in response to detecting that the picture data required for always on display is updated, an update packet as a third data packet comprising the picture update data to the LCM,
the LCM is configured to display an information content through the always on display function based on the first, second, third data packet so that picture data is updated based on the picture update data;
the smart terminal being **characterized in that**:
each of the first, second, third data packet further includes a first field and a second field, the first field and the second field both are fields predefined for the always on display function in a display command set, DCS, of the MIPI protocol,
wherein the first field is configured to indicate whether a data packet is a first one of the at least two packets required for the LCM performing always on display, and a value of the first field is a first preset value or a second preset value, the first preset value is configured to indicate the data packet to be the first one of the at least two data packets, and the second preset value is configured to indicate the data packet to be the following one of a previous data packet in the at least two data packets;
a value of the second field of the first data packet is a third preset value to indicate a type of data included in the first data packet to be the initialization data;
a value of the second field of the second data packet is a fourth preset value to indicate a type of data included in the second data packet is the time calibration data;
a value of the second field of the third data packet is a fifth preset value to indicate the type of data included in the third data packet to be the picture update data.

3. A program product having stored therein instructions that, when executed by a smart terminal comprising an application processor, AP, and a liquid crystal display module, LCM, connected via a mobile industry processor interface MIPI, the LCM comprising a crystal oscillator, causes the smart terminal to perform:
acquiring, by the AP, a current system time as a reference time and including the reference time in initialization data;
transmitting, by the AP, a first data packet including the initialization data via a MIPI protocol to the LCM;
starting an always-on-display by the LCM according to the initialization data;
after transmitting the first data packet via the MIPI protocol to the LCM, detecting, by the AP, whether an initialization of the LCM is completed or whether an always on display function is enabled by the LCM;
retrieving, by the AP, a current system time as a reference time once every first preset time interval;
transmitting, by the AP, a second data packet to the LCM via the MIPI protocol in response to detecting that the initialization of the LCM is completed or the always on display function is enabled by the LCM, in which the second data packet includes the retrieved system time as time calibration data;
performing timing through the crystal oscillator of the LCM, and calculating a system time based on the time calibration data and displaying the system time, by the LCM;
after transmitting the first data packet via the MIPI protocol to the LCM, detecting, by the AP, whether picture data required for always on display is updated according to a preset period; and
in response to detecting that the picture data required for always on display is updated, transmitting, by the AP, an update packet as a third data packet comprising the picture update data to the LCM,
displaying an information content by the LCM through the always on display function based on the first, second, third data packet so that picture data is updated based on the picture update data;
wherein each of the first, second, third data packet further includes a first field and a second field, the first field and the second field both are fields predefined for the always on display function in a display command set, DCS, of the MIPI protocol,
wherein the first field is configured to indicate whether a data packet is a first one of the at least two packets required for the LCM performing always on display, and a value of the first field is a first preset value or a second preset value, the first preset value is configured to indicate the data packet to be the first one of the at least two data packets, and the second preset value is configured to indicate the data packet to be the following one of a previous data packet in the at least two data packets;
a value of the second field of the first data packet is a third preset value to indicate a type of data included in the first data packet to be the initialization data;
a value of the second field of the second data packet is a fourth preset value to indicate a type of data included in the second data packet is the time calibration data;
a value of the second field of the third data packet is a fifth preset value to indicate the type of data included in the third data packet to be the picture update data.

## Patentansprüche

1. Verfahren für ein Always-On-Display, das bei einem smarten Endgerät anwendbar ist, das einen Applikationsprozessor, AP, und ein Flüssigkristallanzeigemodul, LCM, aufweist, welches über eine Mobile Industry Processor Interface, MIPI, angeschlossen ist, wobei das LCM einen Quarzoszillator aufweist, wobei das Verfahren umfasst:
Erfassen, mittels des AP, einer aktuellen Systemzeit als eine Referenzzeit und Einschließen der Referenzzeit in Initialisierungsdaten;
Senden, mittels des AP, eines ersten Datenpakets, das die Initialisierungsdaten enthält, über ein MIPI-Protokoll an das LCM;
Starten eines Always-On-Displays mittels des LCM entsprechend den Initialisierungsdaten;
nach dem Senden des ersten Datenpakets über das MIPI-Protokoll an das LCM, Detektieren, mittels des AP, ob eine Initialisierung des LCM abgeschlossen ist und ob eine Always-On-Display-Funktion durch das LCM aktiviert wird;
Abrufen, mittels des AP, einer aktuellen Systemzeit als eine Referenzzeit einmal pro voreingestelltem Zeitintervall;
Senden, mittels des AP eines zweiten Datenpakets an das LCM über das MIPI-Protokoll als Reaktion auf das Detektieren, dass die Initialisierung des LCM abgeschlossen ist oder die Always-On-Display-Funktion durch das LCM aktiviert wird, in dem das zweite Datenpaket die abgerufene Systemzeit als Zeitkalibrierungsdaten enthält;
Durchführen einer Zeitmessung durch den Quarzoszillator des LCM und Berechnen einer Systemzeit basierend auf den Zeitkalibrierungsdaten und Anzeigen der Systemzeit mittels des LCM;
nach dem Senden des ersten Datenpakets über das MIPI-Protokoll an das LCM, Detektieren, mittels des AP, ob Bilddaten, die für das Always-On-Display erforderlich sind, entsprechend einem voreingestellten Zeitraum aktualisiert werden; und
als Reaktion auf das Detektieren, dass die für das Always-On-Display erforderlichen Bilddaten aktualisiert werden, Senden, mittels des AP, eines Aktualisierungspakets als ein drittes Datenpaket, das die Bildaktualisierungsdaten umfasst, an das LCM, Anzeigen eines Informationsinhalts mittels des LCM durch die Always-On-Display-Funktion basierend auf dem ersten, zweiten und dritten Datenpaket, so dass Bilddaten basierend auf den Bildaktualisierungsdaten aktualisiert werden;
wobei das Verfahren **dadurch gekennzeichnet ist, dass**:
das erste, zweite und dritte Datenpaket ferner jeweils ein erstes Feld und ein zweites Feld aufweisen, wobei das erste Feld und das zweite Feld beides Felder sind, die für die Always-On-Display-Funktion in einem Display-Befehlssatz, DCS, des MIPI-Protokolls vordefiniert sind,
wobei das erste Feld so ausgebildet ist, dass es angibt, ob ein Datenpaket ein erstes von mindestens zwei Paketen ist, die erforderlich sind, damit das LCM ein Always-On-Display ausführt, und wobei ein Wert des ersten Feldes ein erster voreingestellter Wert oder ein zweiter voreingestellter Wert ist, wobei der erste voreingestellte Wert dazu ausgebildet ist, anzugeben, dass das Datenpaket das erste der mindestens zwei Datenpakete ist, und wobei der zweite voreingestellte Wert dazu ausgebildet ist, anzugeben, dass das Datenpaket auf ein vorheriges Datenpaket in den mindestens zwei Datenpaketen folgt;
wobei ein Wert des zweiten Feldes des ersten Datenpakets ein dritter voreingestellter Wert ist, um anzugeben, dass ein in dem ersten Datenpaket enthaltener Datentyp die Initialisierungsdaten sind;
wobei ein Wert des zweiten Feldes des zweiten Datenpakets ein vierter voreingestellter Wert ist, um anzugeben, dass ein in dem zweiten Datenpaket enthaltener Datentyp die Zeitkalibrierungsdaten sind;
wobei ein Wert des zweiten Feldes des dritten Datenpakets ein fünfter voreingestellter Wert ist, um anzugeben, dass der in dem dritten Datenpaket enthaltene Datentyp die Bildaktualisierungsdaten sind.

2. Smartes Endgerät für ein Always-On-Display (300), das einen Applikationsprozessor, AP, und ein Flüssigkristallanzeigemodul, LCM, aufweist, welches über eine Mobile Industry Processor Interface, MIPI, angeschlossen ist, wobei das LCM einen Quarzoszillator aufweist,
wobei der AP dazu ausgebildet ist, eine aktuelle Systemzeit als eine Referenzzeit zu erfassen und die Referenzzeit in Initialisierungsdaten einzuschließen,
wobei der AP ein Sendemodul (301) aufweist, das dazu ausgebildet ist, ein erstes Datenpaket, das die Initialisierungsdaten enthält, über ein MIPI-Protokoll an das LCM zu senden;
wobei das LCM geeignet ist, ein Always-On-Display entsprechend den Initialisierungsdaten zu starten; wobei der AP dazu ausgebildet ist, nach dem Senden des ersten Datenpakets über das MIPI-Protokoll an das LCM, zu detektieren, ob eine Initialisierung des LCM abgeschlossen ist oder ob eine Always-On-Display-Funktion durch das LCM aktiviert wird;
wobei der AP ein Abrufmodul (302) aufweist, das dazu ausgebildet ist, eine aktuelle Systemzeit als eine Referenzzeit einmal pro voreingestelltem Zeitintervall abzurufen, wobei das Sendemodul (301) ferner dazu ausgebildet ist, ein zweites Datenpaket an das LCM über das MIPI-Protokoll zu senden, und zwar als Reaktion auf das Detektieren, dass die Initialisierung des LCM abgeschlossen ist oder die Always-On-Display-Funktion durch das LCM aktiviert wird, in dem das zweite Datenpaket die abgerufene Systemzeit als Zeitkalibrierungsdaten enthält,
wobei das LC geeignet ist, eine Zeitmessung durch den Quarzoszillator des LCM durchzuführen und eine Systemzeit basierend auf den Zeitkalibrierungsdaten zu berechnen und die Systemzeit anzuzeigen;
wobei der AP ferner ein Detektionsmodul (303) aufweist, das dazu ausgebildet ist, zu detektieren, ob Bilddaten, die für das Always-On-Display erforderlich sind, entsprechend einem voreingestellten Zeitraum aktualisiert werden, nachdem das ersten Datenpaket über das MIPI-Protokoll an das LCM gesendet wurde,
wobei das Sendemodul (301) ferner dazu ausgebildet ist, als Reaktion auf das Detektieren, dass die für das Always-On-Display erforderlichen Bilddaten aktualisiert werden, ein Aktualisierungspaket als ein drittes Datenpaket, das die Bildaktualisierungsdaten umfasst, an das LCM zu senden,
wobei das LCM dazu ausgebildet ist, einen Informationsinhalt durch die Always-On-Display-Funktion basierend auf dem ersten, zweiten und dritten Datenpaket anzuzeigen, so dass Bilddaten basierend auf den Bildaktualisierungsdaten aktualisiert werden;
wobei das smarte Endgerät **dadurch gekennzeichnet ist, dass**:
das erste, zweite und dritte Datenpaket ferner jeweils ein erstes Feld und ein zweites Feld aufweisen, wobei das erste Feld und das zweite Feld beides Felder sind, die für die Always-On-Display-Funktion in einem Display-Befehlssatz, DCS, des MIPI-Protokolls vordefiniert sind,
wobei das erste Feld so ausgebildet ist, dass es angibt, ob ein Datenpaket ein erstes von den mindestens zwei Paketen ist, die erforderlich sind, damit das LCM ein Always-On-Display ausführt, und wobei ein Wert des ersten Feldes ein erster voreingestellter Wert oder ein zweiter voreingestellter Wert ist, wobei der erste voreingestellte Wert dazu ausgebildet ist, anzugeben, dass das Datenpaket das erste der mindestens zwei Datenpakete ist, und wobei der zweite voreingestellte Wert dazu ausgebildet ist, anzugeben, dass das Datenpaket auf ein vorheriges Datenpaket in den mindestens zwei Datenpaketen folgt;
wobei ein Wert des zweiten Feldes des ersten Datenpakets ein dritter voreingestellter Wert ist, um anzugeben, dass ein in dem ersten Datenpaket enthaltener Datentyp die Initialisierungsdaten sind;
wobei ein Wert des zweiten Feldes des zweiten Datenpakets ein vierter voreingestellter Wert ist, um anzugeben, dass ein in dem zweiten Datenpaket enthaltener Datentyp die Zeitkalibrierungsdaten sind;
wobei ein Wert des zweiten Feldes des dritten Datenpakets ein fünfter voreingestellter Wert ist, um anzugeben, dass der in dem dritten Datenpaket enthaltene Datentyp die Bildaktualisierungsdaten sind.

3. Programmprodukt, in dem Anweisungen gespeichert sind, die bei Ausführung durch ein smartes Endgerät, das einen Applikationsprozessor, AP, und ein Flüssigkristallanzeigemodul, LCM, aufweist, das über eine Mobile Industry Processor Interface, MIPI, angeschlossen ist, wobei das LCM einen Quarzoszillator aufweist, bewirken, dass das smarte Endgerät Folgendes durchführt:
Erfassen, mittels des AP, einer aktuellen Systemzeit als eine Referenzzeit und Einschließen der Referenzzeit in Initialisierungsdaten;
Senden, mittels des AP, eines ersten Datenpakets, das die Initialisierungsdaten enthält, über ein MIPI-Protokoll an das LCM;
Starten eines Always-On-Displays mittels des LCM entsprechend den Initialisierungsdaten;
nach dem Senden des ersten Datenpakets über das MIPI-Protokoll an das LCM, Detektierten, mittels des AP, ob eine Initialisierung des LCM abgeschlossen ist und ob eine Always-On-Display-Funktion durch das LCM aktiviert wird;
Abrufen, mittels des AP, einer aktuellen Systemzeit als eine Referenzzeit einmal pro voreingestelltem Zeitintervall;
Senden, mittels des AP, eines zweiten Datenpakets an das LCM über das MIPI-Protokoll als Reaktion auf das Detektieren, dass die Initialisierung des LCM abgeschlossen ist oder die Always-On-Display-Funktion durch das LCM aktiviert wird, in dem das zweite Datenpaket die abgerufene Systemzeit als Zeitkalibrierungsdaten enthält;
Durchführen einer Zeitmessung durch den Quarzoszillator des LCM und Berechnen einer Systemzeit basierend auf den Zeitkalibrierungsdaten und Anzeigen der Systemzeit mittels des LCM;
nach dem Senden des ersten Datenpakets über das MIPI-Protokoll an das LCM, Detektieren, mittels des AP, ob Bilddaten, die für das Always-On-Display erforderlich sind, entsprechend einem voreingestellten Zeitraum aktualisiert werden; und
als Reaktion auf das Detektieren, dass die für das Always-On-Display erforderlichen Bilddaten aktualisiert werden, Senden, mittels des AP, eines Aktualisierungspakets als ein drittes Datenpaket, das die Bildaktualisierungsdaten umfasst, an das LCM, Anzeigen eines Informationsinhalts mittels des LCM durch die Always-On-Display-Funktion basierend auf dem ersten, zweiten und dritten Datenpaket, so dass Bilddaten basierend auf den Bildaktualisierungsdaten aktualisiert werden;
wobei das erste, zweite und dritte Datenpaket ferner jeweils ein erstes Feld und ein zweites Feld aufweisen, wobei das erste Feld und das zweite Feld beides Felder sind, die für die Always-On-Display-Funktion in einem Display-Befehlssatz, DCS, des MIPI-Protokolls vordefiniert sind,
wobei das erste Feld so ausgebildet ist, dass es angibt, ob ein Datenpaket ein erstes von mindestens zwei Paketen ist, die erforderlich sind, damit das LCM ein Always-On-Display ausführt, und wobei ein Wert des ersten Feldes ein erster voreingestellter Wert oder ein zweiter voreingestellter Wert ist, wobei der erste voreingestellte Wert dazu ausgebildet ist, anzugeben, dass das Datenpaket das erste der mindestens zwei Datenpakete ist, und wobei der zweite voreingestellte Wert dazu ausgebildet ist, anzugeben, dass das Datenpaket auf ein vorheriges Datenpaket in den mindestens zwei Datenpaketen folgt;
wobei ein Wert des zweiten Feldes des ersten Datenpakets ein dritter voreingestellter Wert ist, um anzugeben, dass ein in dem ersten Datenpaket enthaltener Datentyp die Initialisierungsdaten sind;
wobei ein Wert des zweiten Feldes des zweiten Datenpakets ein vierter voreingestellter Wert ist, um anzugeben, dass ein in dem zweiten Datenpaket enthaltener Datentyp die Zeitkalibrierungsdaten sind;
wobei ein Wert des zweiten Feldes des dritten Datenpaket ein fünfter voreingestellter Wert ist, um anzugeben, dass der in dem dritten Datenpaket enthaltene Datentyp die Bildaktualisierungsdaten sind.

## Revendications

1. Procédé d'affichage continu, pouvant être appliqué à un terminal intelligent comprenant un processeur d'application, dit AP, et un module d'affichage à cristaux liquides, dit LCM, connectés par le biais d'une interface de processeur de l'industrie mobile, dite MIPI, le LCM comprenant un oscillateur à quartz, le procédé comprenant les étapes consistant à :
acquérir, par l'AP, une heure système courante en tant qu'heure de référence et intégrer l'heure de référence dans des données d'initialisation ;
transmettre, par l'AP, un premier paquet de données comprenant les données d'initialisation par le biais d'un protocole de MIPI au LCM ;
démarrer un affichage continu par le LCM conformément aux données d'initialisation ;
après la transmission du premier paquet de données par le biais du protocole de MIPI au LCM, détecter, par l'AP, si une initialisation du LCM a été effectuée ou si une fonction d'affichage continu a été activée par le LCM ;
récupérer, par l'AP, une heure système courante en tant qu'heure de référence une fois par premier intervalle de temps prédéfini ;
transmettre, par l'AP, un deuxième paquet de données au LCM par le biais du protocole de MIPI en réponse à la détection du fait que l'initialisation du LCM a été effectuée ou que la fonction d'affichage continu a été activée par le LCM, dans lequel le deuxième paquet de données comprend l'heure système récupérée en tant que données d'étalonnage de temps ;
effectuer une synchronisation par l'intermédiaire de l'oscillateur à quartz du LCM, et calculer une heure système sur la base des données d'étalonnage de temps et afficher l'heure système par le LCM ;
après la transmission du premier paquet de données par le biais du protocole de MIPI au LCM, détecter, par l'AP, si des données d'image nécessaires pour un affichage continu ont été mises à jour conformément à une période prédéfinie ; et
en réponse à la détection du fait que les données d'image nécessaires pour un affichage continu ont été mises à jour, transmettre, par l'AP, un paquet de mise à jour en tant que troisième paquet de données comprenant les données de mise à jour d'image au LCM,
afficher un contenu d'informations par le LCM par l'intermédiaire de la fonction d'affichage continu sur la base des premier, deuxième et troisième paquets de données de sorte que des données d'image soient mises à jour sur la base des données de mise à jour d'image ;
le procédé étant **caractérisé en ce que** :
chacun des premier, deuxième et troisième paquets de données comprend en outre un premier champ et un second champ, le premier champ et le second champ étant tous les deux des champs prédéfinis pour la fonction d'affichage continu dans un ensemble d'instructions d'affichage, dit DCS, du protocole de MIPI,
dans lequel le premier champ est configuré pour indiquer si un paquet de données est un premier paquet d'au moins deux paquets nécessaires pour que le LCM mette en œuvre un affichage continu, et une valeur du premier champ est une première valeur prédéfinie ou une deuxième valeur prédéfinie, la première valeur prédéfinie étant configurée pour indiquer le paquet de données comme étant le premier paquet des au moins deux paquets de données, et la deuxième valeur prédéfinie étant configurée pour indiquer le paquet de données comme étant le paquet suivant d'un paquet de données précédent des au moins deux paquets de données ;
une valeur du second champ du premier paquet de données est une troisième valeur prédéfinie servant à indiquer un type de données comprises dans le premier paquet de données comme étant les données d'initialisation ;
une valeur du second champ du deuxième paquet de données est une quatrième valeur prédéfinie servant à indiquer qu'un type de données comprises dans le deuxième paquet de données correspond aux données d'étalonnage de temps ;
une valeur du second champ du troisième paquet de données est une cinquième valeur prédéfinie servant à indiquer le type de données comprises dans le troisième paquet de données comme étant les données de mise à jour d'image.

2. Terminal intelligent d'affichage continu (300) comprenant un processeur d'application, dit AP, et un module d'affichage à cristaux liquides, dit LCM, connectés par le biais d'une interface de processeur de l'industrie mobile, dite MIPI, le LCM comprenant un oscillateur à quartz,
dans lequel l'AP est configuré pour acquérir une heure système courante en tant qu'heure de référence et pour intégrer l'heure de référence dans des données d'initialisation,
dans lequel l'AP comprend un module de transmission (301) configuré pour transmettre un premier paquet de données comprenant les données d'initialisation par le biais d'un protocole de MIPI au LCM ;
dans lequel le LCM est apte à démarrer un affichage continu conformément aux données d'initialisation ; l'AP est configuré, après la transmission du premier paquet de données par le biais du protocole de MIPI au LCM, pour détecter si une initialisation du LCM a été effectuée ou si une fonction d'affichage continu a été activée par le LCM ;
dans lequel l'AP comprend un module de récupération (302) configuré pour récupérer une heure système courante en tant qu'heure de référence une fois par premier intervalle de temps prédéfini, le module de transmission (301) étant en outre configuré pour transmettre un deuxième paquet de données au LCM par le biais du protocole de MIPI, en réponse à la détection du fait que l'initialisation du LCM a été effectuée ou que la fonction d'affichage continu a été activée par le LCM, dans lequel le deuxième paquet de données comprend l'heure système récupérée en tant que données d'étalonnage de temps,
dans lequel le LCM est apte à effectuer une synchronisation par l'intermédiaire de l'oscillateur à quartz du LCM, et à calculer une heure système sur la base des données d'étalonnage de temps et à afficher l'heure système ;
dans lequel l'AP comprend en outre un module de détection (303) configuré pour détecter si des données d'image nécessaires pour un affichage continu ont été mises à jour conformément à une période prédéfinie, après la transmission du premier paquet de données par le biais du protocole de MIPI au LCM,
dans lequel le module de transmission (301) est en outre configuré pour transmettre, en réponse à la détection du fait que les données d'image nécessaires pour un affichage continu ont été mises à jour, un paquet de mise à jour en tant que troisième paquet de données comprenant les données de mise à jour d'image au LCM,
le LCM est configuré pour afficher un contenu d'informations par l'intermédiaire de la fonction d'affichage continu sur la base des premier, deuxième et troisième paquets de données de sorte que des données d'image soient mises à jour sur la base des données de mise à jour d'image ;
le terminal intelligent étant **caractérisé en ce que** :
chacun des premier, deuxième et troisième paquets de données comprend en outre un premier champ et un second champ, le premier champ et le second champ étant tous les deux des champs prédéfinis pour la fonction d'affichage continu dans un ensemble d'instructions d'affichage, dit DCS, du protocole de MIPI,
dans lequel le premier champ est configuré pour indiquer si un paquet de données est un premier paquet des au moins deux paquets nécessaires pour que le LCM mette en œuvre un affichage continu, et une valeur du premier champ est une première valeur prédéfinie ou une deuxième valeur prédéfinie, la première valeur prédéfinie étant configurée pour indiquer le paquet de données comme étant le premier paquet des au moins deux paquets de données, et la deuxième valeur prédéfinie étant configurée pour indiquer le paquet de données comme étant le paquet suivant d'un paquet de données précédent des au moins deux paquets de données ;
une valeur du second champ du premier paquet de données est une troisième valeur prédéfinie servant à indiquer un type de données comprises dans le premier paquet de données comme étant les données d'initialisation ;
une valeur du second champ du deuxième paquet de données est une quatrième valeur prédéfinie servant à indiquer qu'un type de données comprises dans le deuxième paquet de données correspond aux données d'étalonnage de temps ;
une valeur du second champ du troisième paquet de données est une cinquième valeur prédéfinie servant à indiquer le type de données comprises dans le troisième paquet de données comme étant les données de mise à jour d'image.

3. Produit-programme comportant des instructions mémorisées en son sein qui, lorsqu'il est exécuté par un terminal intelligent comprenant un processeur d'application, dit AP, et un module d'affichage à cristaux liquides, dit LCM, connectés par le biais d'une interface de processeur de l'industrie mobile, dite MIPI, le LCM comprenant un oscillateur à quartz, amène le terminal intelligent à exécuter les étapes consistant à :
acquérir, par l'AP, une heure système courante en tant qu'heure de référence et intégrer l'heure de référence dans des données d'initialisation ;
transmettre, par l'AP, un premier paquet de données comprenant les données d'initialisation par le biais d'un protocole de MIPI au LCM ;
démarrer un affichage continu par le LCM conformément aux données d'initialisation ;
après la transmission du premier paquet de données par le biais du protocole de MIPI au LCM, détecter, par l'AP, si une initialisation du LCM a été effectuée ou si une fonction d'affichage continu a été activée par le LCM ;
récupérer, par l'AP, une heure système courante en tant qu'heure de référence une fois par premier intervalle de temps prédéfini ;
transmettre, par l'AP, un deuxième paquet de données au LCM par le biais du protocole de MIPI en réponse à la détection du fait que l'initialisation du LCM a été effectuée ou que la fonction d'affichage continu a été activée par le LCM, dans lequel le deuxième paquet de données comprend l'heure système récupérée en tant que données d'étalonnage de temps ;
effectuer une synchronisation par l'intermédiaire de l'oscillateur à quartz du LCM, et calculer une heure système sur la base des données d'étalonnage de temps et afficher l'heure système par le LCM ;
après la transmission du premier paquet de données par le biais du protocole de MIPI au LCM, détecter, par l'AP, si des données d'image nécessaires pour un affichage continu ont été mises à jour conformément à une période prédéfinie ; et
en réponse à la détection du fait que les données d'image nécessaires pour un affichage continu ont été mises à jour, transmettre, par l'AP, un paquet de mise à jour en tant que troisième paquet de données comprenant les données de mise à jour d'image au LCM,
afficher un contenu d'informations par le LCM par l'intermédiaire de la fonction d'affichage continu sur la base des premier, deuxième et troisième paquets de données de sorte que des données d'image soient mises à jour sur la base des données de mise à jour d'image ;
dans lequel chacun des premier, deuxième et troisième paquets de données comprend en outre un premier champ et un second champ, le premier champ et le second champ étant tous les deux des champs prédéfinis pour la fonction d'affichage continu dans un ensemble d'instructions d'affichage, dit DCS, du protocole de MIPI,
dans lequel le premier champ est configuré pour indiquer si un paquet de données est un premier paquet des au moins deux paquets nécessaires pour que le LCM mette en œuvre un affichage continu, et une valeur du premier champ est une première valeur prédéfinie ou une deuxième valeur prédéfinie, la première valeur prédéfinie étant configurée pour indiquer le paquet de données comme étant le premier paquet des au moins deux paquets de données, et la deuxième valeur prédéfinie étant configurée pour indiquer le paquet de données comme étant le paquet suivant d'un paquet de données précédent des au moins deux paquets de données ;
une valeur du second champ du premier paquet de données est une troisième valeur prédéfinie servant à indiquer un type de données comprises dans le premier paquet de données comme étant les données d'initialisation ;
une valeur du second champ du deuxième paquet de données est une quatrième valeur prédéfinie servant à indiquer qu'un type de données comprises dans le deuxième paquet de données correspond aux données d'étalonnage de temps ;
une valeur du second champ du troisième paquet de données est une cinquième valeur prédéfinie servant à indiquer le type de données comprises dans le troisième paquet de données comme étant les données de mise à jour d'image.
